# EUROPEAN PATENT APPLICATION

(11) **EP 3 339 609 A1**
(43) Date of publication of application: **27.06.2018**
(21) Application number: 17191944.2
(22) Date of filing: 19.09.2017
(51) Int. Cl.: F02C 7/22, F23R 3/28, F23R 3/34

(54) **MOUNTING ASSEMBLY FOR GAS TURBINE ENGINE FLUID CONDUIT**

(30) Priority: 23.09.2016 US 201615273846
(71) Applicant: General Electric Company, Schenectady, NY 12345 (US)
(72) Inventor: FLANAGAN, James Scott, Greenville, SC South Carolina 29615 (US); BROWN, Jerome David, Greenville, SC South Carolina 29615 (US); LEMON, Donald Timothy, Greenville, SC South Carolina 29615 (US)
(74) Representative: Lee, Brenda

(57) **Abstract**

The present disclosure is directed to a mounting assembly 100 for a fluid conduit 70. The mounting assembly 100 includes a casing 34, 38, a first fluid conduit segment 74, and a second fluid conduit segment 76. A fitting 102 is spaced apart from the casing 34, 38. The fitting 102 couples the first fluid conduit segment 74 and the second fluid conduit segment 76. A bracket 104 includes a casing mounting portion 130 coupled to the casing 34, 38, a first fitting mounting portion 136 spaced apart from the casing mounting portion 130 and coupled to the fitting 102, and a thickness 120. The thickness 120 of the bracket 104 permits the fitting 102 to move relative to the casing 34, 38.

## Description

### FIELD OF THE TECHNOLOGY

The present disclosure generally relates to gas turbine engines. More particularly, the present disclosure relates to mounting assemblies for fluid conduits in gas turbine engines.

### BACKGROUND

A gas turbine engine generally includes a compressor section, a combustion section, and a turbine section. The compressor section progressively increases the pressure of the air entering the gas turbine engine and supplies this compressed air to the combustion section. The compressed air and a fuel (e.g., natural gas) mix within the combustion section before burning in one or more combustion chambers to generate high pressure and high temperature combustion gases. The combustion gases flow from the combustion section into the turbine section where they expand to produce mechanical rotational energy. For example, expansion of the combustion gases in the turbine section may rotate a rotor shaft connected, e.g., to a generator to produce electricity.

The combustion section typically includes a plurality of annularly arranged combustors, each of which receives compressed air from the compressor section. Each combustor may include a liner positioned within a combustor casing. The liner at least partially defines a combustor chamber having a primary combustion zone and a secondary combustion zone positioned downstream from the primary combustion zone. One or more fuel nozzles may supply the fuel to each of the primary combustion zone. Furthermore, one or more axial fuel staging injectors positioned downstream from the one or more fuel nozzles may supply the fuel to the secondary combustion zone.

Various fuel lines may supply the fuel to the one or more fuel nozzles and the one or more axial fuel staging injectors. One or more mounts may couple these fuel lines to the combustor casing and/or other components in the gas turbine engine. As the gas turbine engine heats up and cools down, the fuel lines thermally expand and contract. Nevertheless, the mounts used to couple the fuel lines to the combustor casing do not accommodate thermal expansion and contraction. That is, the mounts do not permit the fuel lines to move relative due to thermal expansion.

### BRIEF DESCRIPTION OF THE TECHNOLOGY

Aspects and advantages of the technology will be set forth in part in the following description, or may be obvious from the description, or may be learned through practice of the technology.

In one aspect, the present disclosure is directed to a mounting assembly for a fluid conduit. The mounting assembly includes a casing, a first fluid conduit segment, and a second fluid conduit segment. A fitting is spaced apart from the casing. The fitting couples the first fluid conduit segment and the second fluid conduit segment. A bracket includes a casing mounting portion coupled to the casing, a first fitting mounting portion spaced apart from the casing mounting portion and coupled to the fitting, and a thickness. The thickness of the bracket permits the fitting to move relative to the casing.

Another aspect of the present disclosure is directed to a gas turbine engine having a compressor, a combustor, and a turbine. A casing is positioned in one of the compressor, the combustor, and the turbine. A fluid conduit includes a first fluid conduit segment and a second fluid conduit segment. A mounting assembly couples the fluid conduit to the casing. The mounting assembly includes a fitting radially spaced apart from the casing. The fitting couples the first fluid conduit segment and the second fluid conduit segment. A bracket includes a casing mounting portion coupled to the casing, a first fitting mounting portion circumferentially spaced apart from the casing mounting portion and coupled to the fitting, and an axial thickness. The axial thickness of the bracket permits the fitting to move in an axial direction relative to the casing.

These and other features, aspects and advantages of the present technology will become better understood with reference to the following description and appended claims. The accompanying drawings, which are incorporated in and constitute a part of this specification, illustrate embodiments of the technology and, together with the description, serve to explain the principles of the technology.

### BRIEF DESCRIPTION OF THE DRAWINGS

A full and enabling disclosure of the present technology, including the best mode thereof, directed to one of ordinary skill in the art, is set forth in the specification, which makes reference to the appended FIGS., in which:
FIG. 1 is a functional block diagram of an exemplary gas turbine engine that may incorporate various embodiments of the present disclosure;
FIG. 2 is a simplified cross-sectional side view of an exemplary combustor that may incorporate various embodiments of the present disclosure;
FIG. 3 is an enlarged side view of a portion of the exemplary combustor shown in

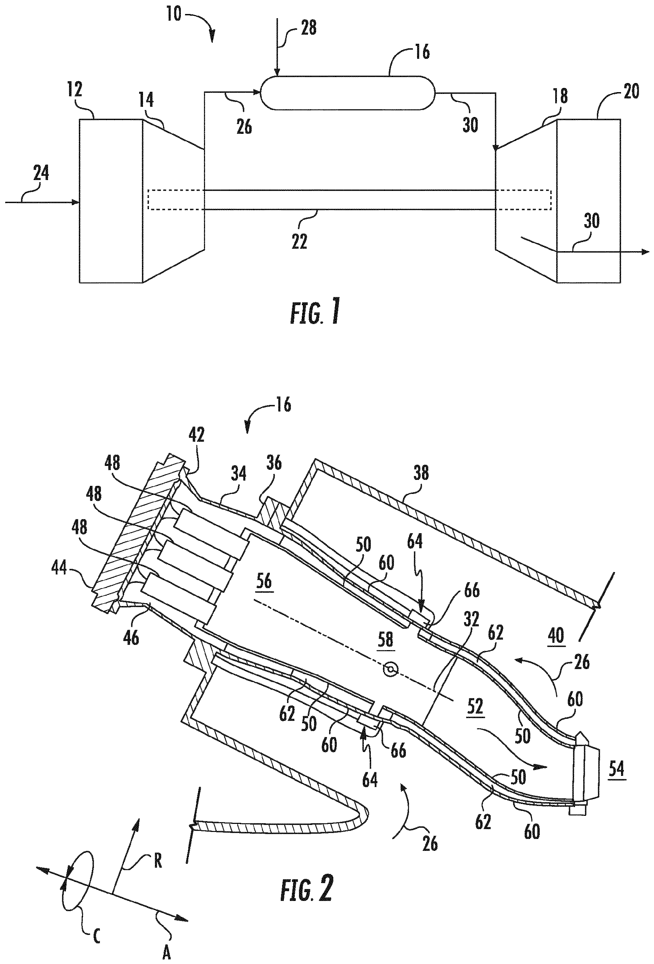

FIG. 2 that may incorporate various embodiments of the present disclosure;

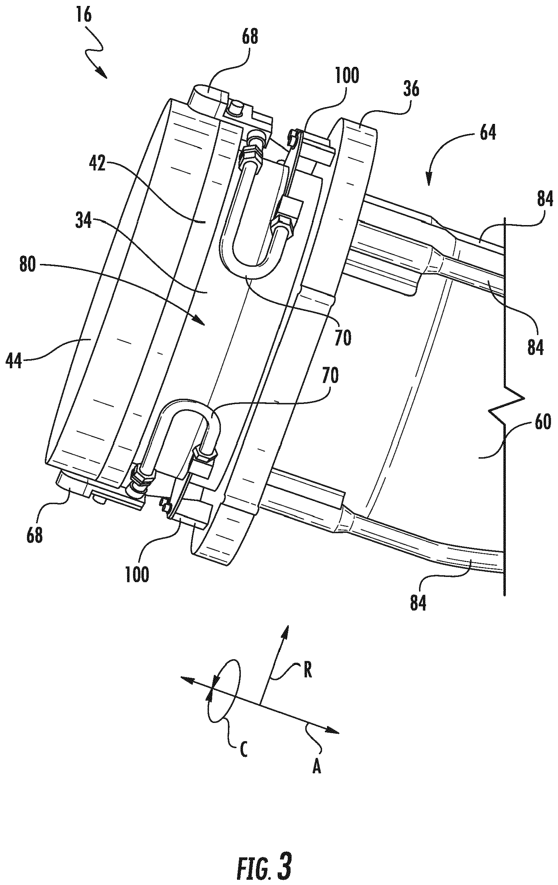

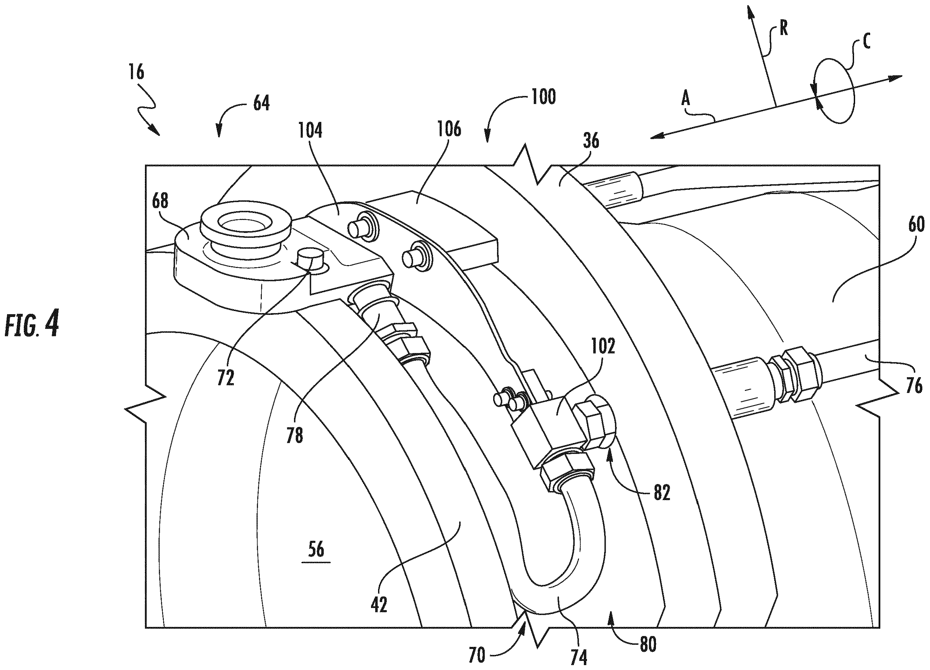

FIG. 4 is an enlarged perspective view of the exemplary combustor shown in FIGS. 2 and 3, illustrating a mounting assembly coupling one or more fuel lines to a combustor casing;

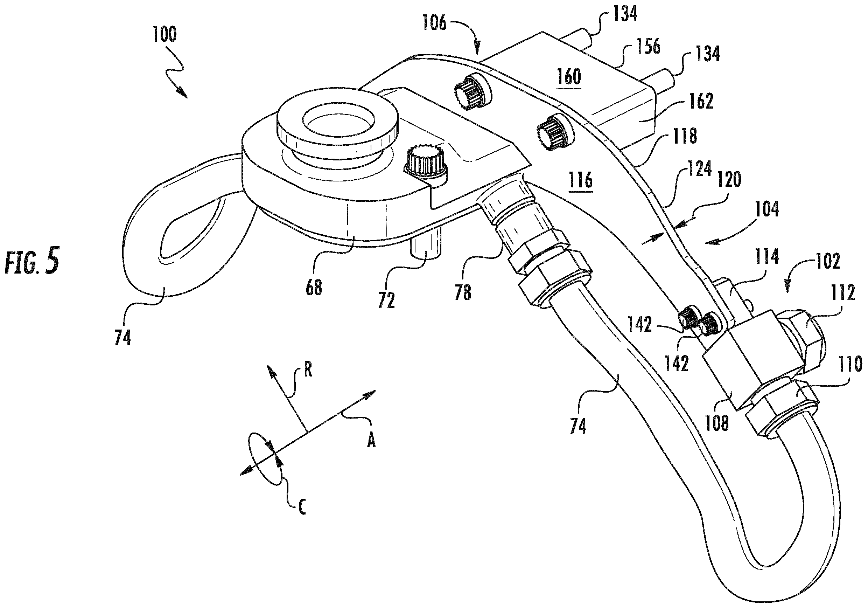

FIG. 5 is a perspective view of the mounting assembly, illustrating a fitting, a bracket, and a spacer;

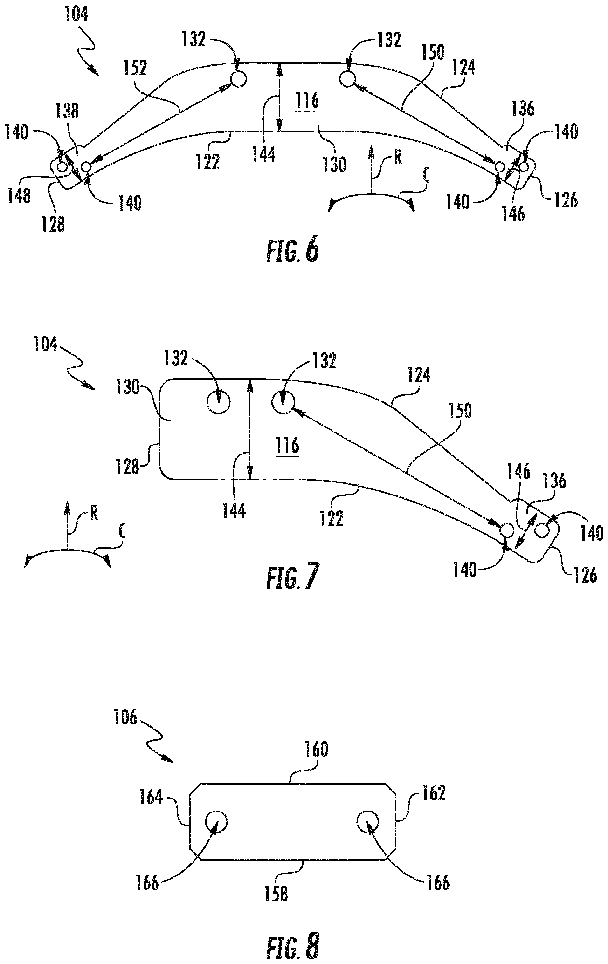

FIG. 6 is a front view of one embodiment of the bracket, illustrating the various features thereof;
FIG. 7 is a front view of an alternate embodiment of the bracket, illustrating the various features thereof; and
FIG. 8 is a front view of one embodiment of the spacer, illustrating the various features.

Repeat use of reference characters in the present specification and drawings is intended to represent the same or analogous features or elements of the present technology.

### DETAILED DESCRIPTION OF THE TECHNOLOGY

Reference will now be made in detail to present embodiments of the technology, one or more examples of which are illustrated in the accompanying drawings. The detailed description uses numerical and letter designations to refer to features in the drawings. Like or similar designations in the drawings and description have been used to refer to like or similar parts of the technology. As used herein, the terms "first", "second", and "third" may be used interchangeably to distinguish one component from another and are not intended to signify location or importance of the individual components. The terms "upstream" and "downstream" refer to the relative direction with respect to fluid flow in a fluid pathway. For example, "upstream" refers to the direction from which the fluid flows, and "downstream" refers to the direction to which the fluid flows.

Each example is provided by way of explanation of the technology, not limitation of the technology. In fact, it will be apparent to those skilled in the art that modifications and variations can be made in the present technology without departing from the scope or spirit thereof. For instance, features illustrated or described as part of one embodiment may be used on another embodiment to yield a still further embodiment. Thus, it is intended that the present technology covers such modifications and variations as come within the scope of the appended claims and their equivalents. Although an industrial or land-based gas turbine is shown and described herein, the present technology as shown and described herein is not limited to a land-based and/or industrial gas turbine unless otherwise specified in the claims. For example, the technology as described herein may be used in any type of turbine including, but not limited to, aviation gas turbines (e.g., turbofans, etc.), steam turbines, and marine gas turbines.

Now referring to the drawings, wherein identical numerals indicate the same elements throughout the figures, FIG. 1 schematically illustrates an exemplary gas turbine engine 10. As depicted therein, the gas turbine engine 10 includes an inlet section 12, a compressor 14, one or more combustors 16, a turbine 18, and an exhaust section 20. The compressor 14 and turbine 18 may be coupled by a shaft 22, which may be a single shaft or a plurality of shaft segments coupled together.

During operation, the gas turbine engine 10 produces mechanical rotational energy, which may, e.g., be used to generate electricity. More specifically, air 24 enters the inlet section 12 of the gas turbine engine 10. From the inlet section 12, the air 24 flows into the compressor 14, where it is progressively compressed to provide compressed air 26 to each of the combustors 16. The compressed air 26 in each of the combustors 16 mixes with a fuel 28. The resulting fuel-air mixture burns in the combustors 16 to produce high temperature and high pressure combustion gases 30. From the combustors 16, the combustion gases 30 flow through the turbine 18, which extracts kinetic and/or thermal energy therefrom. This energy extraction rotates the shaft 22, thereby creating mechanical rotational energy for powering the compressor 14 and/or generating electricity. The combustion gases 30 exit the gas turbine engine 10 through the exhaust section 20.

FIG. 2 illustrates an exemplary embodiment of one of the combustors 16. As depicted, the combustor 16 defines an axial centerline 32 extending therethrough. In this respect, the combustor 16 defines an axial direction A, a radial direction R, and a circumferential direction C. In general, the axial direction A extends parallel to the axial centerline 32, the radial direction R extends orthogonally outward from the axial centerline 32, and the circumferential direction C extends concentrically around the axial centerline 32.

As shown in FIG. 2, the combustor 16 includes a combustor casing 34 having a first flange 36. In particular, the first flange 36 extends radially outwardly from the combustor casing 34 and couples to a compressor discharge casing 38. The combustor casing 34 and the compressor discharge casing 38 collectively define at least a portion of a high pressure plenum 40 in fluid communication with the compressor 14 (FIG. 1). As such, the combustor casing 34 and the compressor discharge casing 38 contain the compressed air 26 entering the combustor 16 from the compressor 14. The combustor casing 34 also includes a second flange 42 that couples to an end cover 44. As shown in FIG. 2, the combustor casing 34 and end cover 44 collectively define a head end portion 46 of the combustor 16. The head end portion 46 is in fluid communication with the high pressure plenum 40 and/or the compressor 14. One or more primary fuel injectors 48 extend axially downstream from the end cover 44.

The combustor 16 also includes a liner 50 that at least partially defines a hot gas path 52 extending from the one or more primary fuel injectors 48 to an inlet 54 of the turbine 18 (FIG. 1). In this respect, the liner 50 at least partially defines a primary or first combustion or reaction zone 56 in which a first fuel-air mixture combusts. The one or more primary fuel injectors 48 supply fuel 28 to the first combustion zone 56. The liner 50 also at least partially defines a secondary combustion or reaction zone 58 positioned axially downstream from the first combustion zone 56 of the combustor 16. A second fuel-air mixture combusts in the second combustion zone 58. In the embodiment shown in FIG. 2, the liner 50 may be formed so as to include a tapering or transition portion. In particular embodiments, the liner 50 may be formed from a singular or continuous body. A flow sleeve 60 circumferentially surrounds and is radially spaced from at least a portion of the liner 50 to form a cooling flow annulus 62 therebetween. The combustor 16 may have different configurations in other embodiments.

In the embodiment shown in FIG. 2, the combustor 16 includes an axial fuel staging system 64 ("AFS system 64"). More specifically, the AFS system 64 includes one or more axial fuel staging injectors 66 ("AFS injectors 66") axially spaced from the one or more primary fuel injectors 48. In particular, the one or more AFS injectors 66 are disposed downstream of the one or more primary fuel injectors 48 and upstream of the inlet 54 to the turbine 18. In this respect, the one or more AFS injectors 66 supply fuel 28 to the second combustion zone 58. The combustor 16 may include one, two, three, four, or more AFS injectors 66.

FIG. 3 is an enlarged view of the combustor 16, illustrating further aspects of the AFS system 64. In particular, the AFS system 64 may include one or more fuel distribution manifolds 68. Each fuel distribution manifold 68 distributes the fuel 28 to one or more fuel lines 70 coupled thereto for eventual delivery to one or more of the AFS injectors 66 (FIG. 2). In the embodiment shown in FIG. 3, the AFS system 64 includes two circumferentially opposed fuel distribution manifolds 68 positioned radially outward from the combustor casing 34 and the end cover 44. As shown, each fuel distribution manifold 68 may be coupled to the second flange 42 of the combustor casing 34 via a fastener 72 (FIG. 4) or any other suitable connection method. In alternate embodiments, however, the AFS system 64 may include more or fewer fuel distribution manifolds 68 and/or each fuel distribution manifold 68 may be positioned at other locations in the combustor 16. Furthermore, some embodiments of the AFS system 64 may not include any fuel distribution manifolds 68.

As mentioned above and shown in FIG. 3, the AFS system 64 includes one or more fuel lines 70. In particular, each of the fuel lines 70 extends from one of the fuel distribution manifolds 68 to one of the AFS injectors 66 (FIG. 2). That is, each of the fuel lines 70 is in fluid communication with one of the fuel distribution manifolds 68 and one of the AFS injectors 66. As such, each fuel line 70 transports fuel 28 from one of the fuel distribution manifolds 68 to one of the AFS injectors 66. In some embodiments, two fuel lines 70 couple to each fuel distribution manifold 68. Each of these fuel lines 70 may then couple to different AFS injectors 66. In such embodiments, each fuel distribution manifold provides fuel 28 to two AFS injectors 66. Nevertheless, one, three, four, or more fuel lines 70 may couple to each fuel distribution manifold 68 in alternate embodiments. Moreover, multiple fuel lines 70 may couple to the same AFS injector 66. The fuel lines 70 may be rigid (e.g., extruded metal) or flexible (e.g., braided metal).

FIG. 4 is an enlarged view of a portion of the combustor 16, illustrating one of the fuel lines 70 in greater detail. In the embodiment shown, the fuel line 70 includes a first fuel line segment 74 coupled to the corresponding fuel distribution manifold 68 and a second fuel line segment 76 coupled to the corresponding AFS injectors 66 (FIG. 2). A fitting 78 or other connector may couple the first fuel line segment 74 to the fuel distribution manifold 68. In some embodiments, the fuel line 70 may be welded or brazed, other otherwise directly coupled to the fuel distribution manifold 68. In embodiments that do not include the fuel distribution manifold 68, the first fuel line segment 74 may couple to another suitable source of the fuel 28. As shown in FIG. 4, the first fuel line segment 74 is positioned in a channel 80 defined between the first and second flanges 36, 42 of the combustor casing 34. The second fuel line segment 76 couples to the first fuel line segment 74 in the channel 80. The second fuel line segment 76 then extends through an aperture 82 defined by the first flange 36 and along the flow sleeve 60 to one of the AFS injectors 66. As shown in FIG. 3, a shield 84 may protect the portion of the second fuel line segment 76 extending along the flow sleeve 60 from the compressed air 26 flowing through the cooling flow annulus 62. In alternate embodiments, the first and second fuel line segments 74, 76 may be positioned at different locations in the combustor 16. Furthermore, each fuel line 70 may include more fuel line segments.

As illustrated in FIGS. 3 and 4, the combustor 16 includes one or more mounting assemblies 100 that couple the fuel lines 70 to the combustor casing 32. In particular, each mounting assembly 100 positions and supports one or more of the fuel lines 70 such that the first and second fuel line segments 74, 76 thereof are radially spaced apart from the combustor casing 34. As such, the first and second fuel line segments 74, 76 of each fuel line 70 are not in contact with the combustor casing 34. In the embodiment shown in FIGS. 3 and 4, the combustor 16 includes two mounting assemblies 100 positioned in the channel 80 between the first and second flanges 36, 42 of the combustor casing 34. Nevertheless, the combustor 16 may include more or fewer mounting assemblies 100 and/or each mounting assembly 100 may be positioned in different locations in the combustor 16.

FIGS. 4 and 5 illustrate one embodiment of the mounting assembly 100. As shown, the mounting assembly 100 includes one or more fittings 102, a bracket 104, and a spacer 106. In some embodiments, the mounting assembly 100 may include multiple fittings 102 if the mounting assembly 100 supports multiple fuel lines 70. For example, the mounting assembly 100 may include two fittings 102 if the mounting assembly 100 supports two fuel lines 70 (i.e., one fitting 102 for each fuel line 70).

As shown in FIGS. 4 and 5, each fitting 102 is radially spaced apart from the combustor casing 34 and fluidly couples the first and second fuel line segments 74, 76 of one of the fuel lines 70. In the embodiment shown in FIGS. 4 and 5, each fitting 102 includes a body 108 having a first connector 110 and a second connector 112 extending outwardly therefrom. The first connector 110 couples to the first fuel line segment 74, and the second connector 112 couples to the second fuel line segment 76. The first and second connectors 110, 112 may be threaded connectors or any other suitable type of connector. Although the embodiment of the fitting 102 shown in FIGS. 4 and 5 includes two connectors 110, 112, the fitting 102 may have more connectors. As such, more than two fuel line segments may couple to the fittings 102.

The first connector 110 may be angularly oriented relative to the second connector 112. In the embodiment shown in FIGS. 4 and 5, the first connector 110 is oriented at a ninety degree angle (i.e., perpendicularly) relative to the second connector 112. As such, the first and second connectors 110, 112 are axially and circumferentially spaced apart. In alternate embodiments, the first connector 110 may be oriented at a 180 degree angle relative to the second connector 112. In such embodiments, the first and second connectors 110, 112 are axially aligned and circumferentially spaced apart. Nevertheless, the first connector 110 may be oriented at any suitable angle relative to the second connector 112.

In some embodiments, the fitting 102 may include a boss 114 extending outwardly from the body 108 for coupling the fitting 102 to the bracket 104. In the embodiment shown in FIGS. 4 and 5, the boss 114 is oriented at a ninety degree angle (i.e., perpendicularly) relative to the second connector 112 and at a 180 degree angle relative to the first connector 110. In such embodiments, the boss 114 is axially aligned with and circumferentially spaced apart from the first connector 110. Furthermore, the boss 114 is axially and circumferentially spaced apart from the second connector 112. Alternately, the boss 114 may be oriented at a ninety degree angle (i.e., perpendicularly) relative to the first connector 110 and at a 180 degree angle relative to the second connector 112. In further embodiments, the boss 114 may extend outward from the same side of the body 108 and in the same direction as one of the first or second connectors 110, 112. In such embodiments, the boss 108 and the first or second connector 110, 112 are circumferentially aligned and axially spaced apart. Nevertheless, the boss 114 may have any suitable orientation relative to the first and second connectors 110, 112. Some embodiments of the fitting 102 may include more than one boss 114, while other embodiments may be devoid of any bosses 114.

As shown in FIGS. 4 and 5, each mounting assembly 100 includes the bracket 104, which couples one or more of the fittings 102 to the combustor casing 34. In particular, the bracket 104 supports each fitting 102 coupled thereto in a position radially spaced apart from the combustor casing 34. In some embodiments, the bracket 104 may couple two fittings 102 to the combustor casing 34. In other embodiments, however, the bracket 104 may couple to only one fitting 102 to the combustor casing 34.

FIGS. 5 and 6 illustrate one embodiment of the bracket 104. As shown, the bracket 104 includes an axially upstream surface 116 axially spaced apart from an axially downstream surface 118. As such, the bracket 104 has an axial thickness 120. As shown in FIG. 5, the axial thickness 120 may be constant along the axial direction A and the circumferential direction C. The bracket 104 also includes a radially inner surface 122 radially spaced apart from a radially outer surface 124. Furthermore, the bracket 104 includes a first circumferential surface 126 circumferentially spaced apart from a second circumferential surface 128.

Referring particularly to FIG. 6, the bracket 104 includes a casing mounting portion 130 that couples to the combustor casing 34. In particular, the casing mounting portion 130 may directly or indirectly (e.g., via the spacer 106, washers, etc.) couple to the combustor casing 34. In the embodiment of the bracket 104 shown in FIG. 6, the casing mounting portion 130 defines a pair of casing mounting apertures 132 that extend axially therethrough. Each of the casing mounting apertures 132 receives a casing mounting fastener 134 (FIG. 5) that couples the bracket 104 to the combustor casing 34. In alternate embodiments, the casing mounting portion 130 may define more or fewer casing mounting apertures 132. In some embodiments, the casing mounting portion 130 may devoid of any casing mounting apertures 132. In such embodiments, the casing mounting portion 130 may couple to the combustor casing 34 via welding, brazing, or any other suitable connection method.

The bracket 104 also includes a first fitting mounting portion 136 and a second fitting mounting portion 138 in the embodiment shown in FIGS. 5 and 6. More specifically, the first fitting mounting portion 136 couples to the boss 114 of the fitting 102, and second fitting mounting portion 138 couples to a boss of an additional fitting (not shown). The first and second fitting mounting portions 136, 138 may directly or indirectly (e.g., via spacers, washers, etc.) couple to the bosses 114 of the fittings 102. In the embodiment of the bracket 104 shown in FIG. 6, the first and second fitting mounting portions 136, 138 each define a pair of fitting mounting apertures 140 that extend axially therethrough. Each of the fitting mounting apertures 140 receives a fitting mounting fastener 142 (FIG. 5) that couples the bracket 104 to each respective boss 114. In alternate embodiments, the first and/or second fitting mounting portions 136, 138 may define more or fewer fitting mounting apertures 140. In some embodiments, the first and/or second fitting mounting portions 136, 138 may be devoid of any fitting mounting apertures 140. In such embodiments, the first and/or second fitting mounting portions 136, 138 may couple to the bosses 114 via welding, brazing, or any other suitable connection method. In embodiments where the fitting 102 does not include the boss 114, the first or second fitting mounting portions 136, 138 may couple directly to the body 104 of the fitting 102.

In the embodiment shown in FIGS. 5 and 6, the bracket 104 is arcuate. As such, the radial length of the bracket 104 varies along the circumferential direction C. More specifically, the casing mounting portion 130 of the bracket 104 has a casing mounting portion radial length 144. Furthermore, the first and second fitting mounting portions 136, 138 of the bracket 104 respectively have a first fitting mounting portion radial length 146 and a second fitting mounting portion radial length 148. The casing mounting portion radial length 144 is greater than each of the first and second fitting mounting portion radial lengths 146, 148. The first and second fitting mounting portion radial lengths 146, 148 are the same in the embodiment shown in FIG. 6; although, the first and second fitting mounting portion radial lengths 146, 148 may be different in other embodiments. Nevertheless, the bracket 104 may have any suitable shape.

As best illustrated in FIG. 6, the first and second fitting mounting portions 136, 138 are circumferentially spaced apart by the casing mounting portion 130. More specifically, the first fitting mounting portion 136 is positioned proximate to the first circumferential surface 126, and the second fitting mounting portion 138 is positioned proximate to the second circumferential surface 128. In this respect, the first and second fitting mounting portions 136, 138 are circumferentially spaced apart. Furthermore, the casing mounting portion 130 is positioned circumferentially between the first and second fitting mounting portions 136, 138.

The casing mounting portion 130 is circumferentially spaced apart from the first and second fitting mounting portions 136, 138. In particular, the casing mounting portion 130 and the first fitting mounting portion 136 are circumferentially spaced apart by a first circumferential distance 150. As shown in FIG. 6, the first circumferential distance 150 extends from the mounting point located on the casing mounting portion 130 (e.g., the casing mounting aperture 132) closest to the first fitting mounting portion 136 to the mounting point (e.g., the fitting mounting aperture 140) located on the first fitting mounting portion 136 closest to the casing mounting portion 130. Similarly, the casing mounting portion 130 and the second fitting mounting portion 138 are circumferentially spaced apart by a second circumferential distance 152. As shown, the second circumferential distance 152 extends from the mounting point located on the casing mounting portion 130 (e.g., the casing mounting aperture 132) closest to the second fitting mounting portion 138 to the mounting point (e.g., the fitting mounting aperture 140) located on the second fitting mounting portion 138 closest to the casing mounting portion 130. In the embodiment shown in FIG. 6, the first and second circumferential distances 150, 152 are the same. Although, the first and second circumferential distances 150, 152 maybe different in other embodiments.

The bracket 104 permits the fitting 102 to move relative to the combustor casing 34 in the axial direction A, but not in the radial direction R or the circumferential direction C. More specifically, the axial thickness 120 of the bracket 104 is thin enough to permit the bracket 104 to flex or otherwise move axially. This axial movement permits relative movement between the fitting 102 and the combustor casing 34. The radial lengths 144, 146, 148 are long enough to prevent the bracket 104 from moving radially. Similarly, the first and second circumferential distances 150, 152 are long enough to prevent the bracket 104 from moving circumferentially.

FIG. 7 illustrates an alternate embodiment of the bracket 104. Unlike the embodiment shown in FIGS. 5 and 6, the embodiment of the bracket 104 shown in FIG. 7 includes the casing mounting portion 130 and the first fitting mounting portion 136. This embodiment of the bracket 104 does not include the second fitting mounting portion 138. As such, the bracket 104 only couples to one fitting 102. As shown in FIG. 7, the first fitting mounting portion 136 is positioned proximate to the first circumferential surface 126, and the casing mounting portion 130 is positioned proximate to the second circumferential surface 128. The bracket 104 shown in FIG. 7 is otherwise substantially similar to the bracket 104 shown in FIG. 6.

As mentioned above, the embodiment of the mounting assembly 100 shown in FIGS. 4 and 5 includes the spacer 106. In particular, the spacer 106 may be used to space the bracket 104 apart (e.g., axially) from the portion of the combustor casing 34 to which the bracket 104 couples as shown in FIG. 4. As illustrated in FIGS. 5 and 8, the spacer 106 includes a first axial surface 154 axially spaced apart from a second axial surface 156. The spacer 106 also includes an inner radial surface 158 spaced apart from an outer radial surface 160. Furthermore, the spacer 106 includes a first circumferential surface 162 circumferentially spaced apart from a second circumferential surface 164. Although the spacer 106 is shown as having a rectangular cross-section, the spacer 106 may have any suitable geometric cross-section. Some embodiments of the mounting assembly 100 may not include the spacer 106. In such embodiments, the bracket 104 connects directly to the combustor casing 34.

The spacer 106 may include one or more passages 166 extending therethrough for receiving the one or more casing mounting fasteners 134, which may couple the bracket 104 to the combustor casing 34. In the embodiment shown in FIGS. 5 and 8, a pair of the passages 166 extends axially through the spacer 106 from the first axial surface 154 through the second axial surface 156. In this respect, the first axial surface 154 of the spacer 106 is in contact with the bracket 104. Conversely, the second axial surface 156 of spacer 106 is in contact with the first flange 36 of the combustor casing 34. In alternate embodiments, however, the passages 166 may extend through any suitable pair of the first axial surface 154, the second axial surface 156, the inner radial surface 158, the outer radial surface 160, the first circumferential surface 162, and the second circumferential surface 164. Furthermore, the spacer 106 may define more or fewer passages 166 extending therethrough.

Unlike conventional fuel line mounts, the mounting assembly 100 permits the fuel line 70 to move axially in response to temperature changes. Furthermore, the mounting assembly 100 prevents the fuel line 70 from moving radially and circumferentially relative to the combustor casing 34. More specifically, the fitting 102 couples the first and second fuel line segments 74, 76. The bracket 104, in turn, couples the fitting 102 to the combustor casing 34. The axial thickness 120 is thin enough to permit the bracket 104 to flex or otherwise move in the axial direction A. Conversely, the radial lengths 144, 146, 148 and the circumferential distances 150, 152 are long enough to prevent radial and circumferential movement of the bracket 104.

The mounting assembly 100 is described above in the context of coupling one or more fuel lines 70 to the combustor casing 34 of the combustor 16. In particular, the fuel lines 70 supply fuel 28 to one of the AFS injectors 66. Nevertheless, the mounting assembly 100 may couple the fuel lines (not shown) providing fuel 28 to the primary fuel injectors 48 or the fuel distribution manifolds 68 to the combustor casing 34 or another component in the combustor 16. In further alternate embodiments, the mounting assembly 100 may couple any fluid conduit (e.g., lubricant lines, air lines, etc.) in the gas turbine engine 10 to any component in the inlet section 12, the compressor 14, the one or more combustors 16, the turbine 18, and/or exhaust section 20 of the gas turbine engine 10.

This written description uses examples to disclose the technology, and also to enable any person skilled in the art to practice the technology, including making and using any devices or systems and performing any incorporated methods. The patentable scope of the technology is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal language of the claims.

Various aspects and embodiments of the present invention are defined by the following numbered clauses:
1. A mounting assembly for a fluid conduit, the mounting assembly comprising:
   a casing;
   a first fluid conduit segment;
   a second fluid conduit segment;
   a fitting spaced apart from the casing, the fitting coupling the first fluid conduit segment and the second fluid conduit segment; and
   a bracket comprising a casing mounting portion coupled to the casing, a first fitting mounting portion spaced apart from the casing mounting portion and coupled to the fitting, and a thickness;
   wherein the thickness of the bracket permits the fitting to move relative to the casing.
2. The mounting assembly of clause 1, wherein the thickness of the bracket is an axial thickness, and wherein the axial thickness of the bracket permits the fitting to move in an axial direction relative to the casing.
3. The mounting assembly of clause 1 or 2, wherein the casing mounting portion of the bracket and the first fitting mounting portion of the bracket are circumferentially spaced apart by a circumferential distance, and wherein the circumferential distance prevents the fitting from moving in a circumferential direction relative to the casing.
4. The mounting assembly of any preceding clause, wherein the casing mounting portion of the bracket comprises a casing mounting portion radial length and the first fitting mounting portion of the bracket comprises a first fitting mounting portion radial length, and wherein the casing mounting portion radial length is greater than the first fitting mounting portion radial length.
5. The mounting assembly of any preceding clause, wherein the bracket comprises a second fitting mounting portion circumferentially spaced apart from the first fitting mounting portion of the bracket.
6. The mounting assembly of any preceding clause, wherein the casing mounting portion of the bracket is positioned circumferentially between the first fitting mounting portion of the bracket and the second fitting mounting portion of the bracket.
7. The mounting assembly of any preceding clause, wherein the fitting is radially spaced apart from the casing.
8. The mounting assembly of any preceding clause, wherein the fitting comprises a boss that couples to the first fitting mounting portion of the bracket.
9. The mounting assembly of any preceding clause, wherein the fitting comprises a first connector coupled to the first fluid conduit segment and a second connector coupled to the second fluid conduit segment, and wherein the first connector is oriented at an angle relative to the second connector.
10. The mounting assembly of any preceding clause, wherein the boss and one of the first connector and the second connector are axially aligned and circumferentially spaced apart.
11. The mounting assembly of any preceding clause, further comprising:
   a spacer positioned between the casing mounting portion of the bracket and the casing.
12. The mounting assembly of any preceding clause, wherein the spacer is positioned axially between the casing mounting portion of the bracket and the casing.
13. The mounting assembly of any preceding clause, wherein the bracket is arcuate.
14. A gas turbine engine, comprising:
   a compressor;
   a combustor;
   a turbine; and
   a casing positioned in one of the compressor, the combustor, and the turbine;
   a fluid conduit comprising a first fluid conduit segment and a second fluid conduit segment; and
   a mounting assembly coupling the fluid conduit to the casing, the mounting assembly comprising:
      a fitting radially spaced apart from the casing, the fitting coupling the first fluid conduit segment and the second fluid conduit segment; and
      a bracket comprising a casing mounting portion coupled to the casing, a first fitting mounting portion circumferentially spaced apart from the casing mounting portion and coupled to the fitting, and an axial thickness;
      wherein the axial thickness of the bracket permits the fitting to move in an axial direction relative to the casing.
15. The gas turbine engine of any preceding clause, wherein the casing mounting portion of the bracket and the first fitting mounting portion of the bracket are circumferentially spaced apart by a circumferential distance, and wherein the circumferential distance prevents the fitting from moving in a circumferential direction relative to the casing.
16. The gas turbine engine of any preceding clause, wherein the bracket comprises a second fitting mounting portion circumferentially spaced apart from the first fitting mounting portion of the bracket.
7. The gas turbine engine of any preceding clause, further comprising:
   a spacer positioned axially between the casing mounting portion of the bracket and the casing.
18. The gas turbine engine of any preceding clause, wherein the casing is a combustor casing.
19. The gas turbine engine of any preceding clause, wherein the combustor casing comprises a first flange and second flange axially spaced apart from the first flange, the first flange and the second flange defining a channel therebetween, and wherein the first fluid conduit segment, the fitting, and the bracket are positioned in the channel.
20. The gas turbine engine of any preceding clause, further comprising:
   an axial fuel staging injector fluidly coupled to the first fluid conduit segment and the second fluid conduit segment.

## Claims

1. A mounting assembly (100) for a fluid conduit (70), the mounting assembly (100) comprising:
a casing (34, 38);
a first fluid conduit segment (74);
a second fluid conduit segment (76);
a fitting (102) spaced apart from the casing (34, 38), the fitting (102) coupling the first fluid conduit segment (74) and the second fluid conduit segment (76); and
a bracket (104) comprising a casing mounting portion (130) coupled to the casing (34, 38), a first fitting mounting portion (136) spaced apart from the casing mounting portion (130) and coupled to the fitting (102), and a thickness (120);
wherein the thickness (120) of the bracket (104) permits the fitting (102) to move relative to the casing (34, 38).

2. The mounting assembly (100) of claim 1, wherein the thickness (120) of the bracket (104) is an axial thickness (120), and wherein the axial thickness (120) of the bracket (104) permits the fitting (102) to move in an axial direction (A) relative to the casing (34, 38).

3. The mounting assembly (100) of claim 1 or 2, wherein the casing mounting portion (130) of the bracket (104) and the first fitting mounting portion (136) of the bracket (104) are circumferentially spaced apart by a circumferential distance (150), and wherein the circumferential distance (150) prevents the fitting (102) from moving in a circumferential direction (C) relative to the casing (34, 38).

4. The mounting assembly (100) of claim 1 or 2, wherein the casing mounting portion (130) of the bracket (104) comprises a casing mounting portion radial length (144) and the first fitting mounting portion (136) of the bracket (104) comprises a first fitting mounting portion radial length (146), and wherein the casing mounting portion radial length (144) is greater than the first fitting mounting portion radial length (146).

5. The mounting assembly (100) of claim 1 or 2, wherein the bracket (104) comprises a second fitting mounting portion (138) circumferentially spaced apart from the first fitting mounting portion (136) of the bracket (104).

6. The mounting assembly (100) of claim 5, wherein the casing mounting portion (130) of the bracket (104) is positioned circumferentially between the first fitting mounting portion (136) of the bracket (104) and the second fitting mounting portion (138) of the bracket (104).

7. The mounting assembly (100) of any preceding claim, wherein the fitting (102) is radially spaced apart from the casing (34, 38).

8. The mounting assembly (100) of any preceding claim, wherein the fitting (102) comprises a boss (114) that couples to the first fitting mounting portion (136) of the bracket (104).

9. The mounting assembly (100) of claim 8, wherein the fitting (102) comprises a first connector (110) coupled to the first fluid conduit segment (74) and a second connector (112) coupled to the second fluid conduit segment (76), and wherein the first connector (110) is oriented at an angle relative to the second connector (112).

10. The mounting assembly (100) of claim 9, wherein the boss (114) and one of the first connector (110) and the second connector (112) are axially aligned and circumferentially spaced apart.

11. The mounting assembly (100) of any preceding claim, further comprising:
a spacer (106) positioned between the casing mounting portion (130) of the bracket (104) and the casing (34, 38).

12. The mounting assembly (100) of claim 11, wherein the spacer (106) is positioned axially between the casing mounting portion (130) of the bracket (104) and the casing (34, 38).

13. The mounting assembly (100) of any preceding claim, wherein the bracket (104) is arcuate.

14. A gas turbine engine (10), comprising:
a compressor (14);
a combustor (16);
a turbine (18); and
a casing (34, 38) positioned in one of the compressor (14), the combustor (16), and the turbine (18);
a fluid conduit (70) comprising a first fluid conduit segment (74) and a second fluid conduit segment (76); and
a mounting assembly (100) coupling the fluid conduit (70) to the casing (34, 38), the mounting assembly (100) comprising:
a fitting (102) radially spaced apart from the casing (34, 38), the fitting (102) coupling the first fluid conduit segment (74) and the second fluid conduit segment (76); and
a bracket (104) comprising a casing mounting portion (130) coupled to the casing (34, 38), a first fitting mounting portion (136) circumferentially spaced apart from the casing mounting portion (130) and coupled to the fitting (102), and an axial thickness (120);
wherein the axial thickness (120) of the bracket (104) permits the fitting (102) to move in an axial direction (A) relative to the casing (34, 38).

15. The gas turbine engine (10) of claim 14, further comprising:
an axial fuel staging injector (66) fluidly coupled to the first fluid conduit segment (74) and the second fluid conduit segment (76).
